# EUROPEAN PATENT SPECIFICATION

(11) **EP 3 776 193 B1**
(45) Date of publication and mention of the grant of the patent: **25.10.2023**
(21) Application number: 19722286.2
(22) Date of filing: 29.03.2019
(51) Int. Cl.: G06F 9/451, G06F 8/70, G06F 8/77, G06F 11/36, G06F 3/048

(54) **CAPTURING AND PROCESSING INTERACTIONS WITH A USER INTERFACE OF A NATIVE APPLICATION**
ERFASSUNG UND VERARBEITUNG VON INTERAKTIONEN MIT EINER BENUTZERSCHNITTSTELLE EINER NATIVEN ANWENDUNG
CAPTURE ET TRAITEMENT D'INTERACTIONS AVEC UNE INTERFACE UTILISATEUR D'UNE APPLICATION D'ORIGINE

(30) Priority: 30.03.2018 US 201862650841 P
(43) Date of publication of application: 17.02.2021
(73) Proprietor: FULLSTORY, INC., Atlanta GA 30309 (US)
(72) Inventor: MASTRACCI, Matthew, Atlanta, GA 30309 (US)
(74) Representative: Fish & Richardson P.C.
(86) International application number: PCT/US2019/024831
(87) International publication number: WO 2019/191584

(56) References cited:
- US-A1- 2014 280 517
- Anonymous: "Graphics Contexts", , 21 March 2017 (2017-03-21), XP055607809, Retrieved from the Internet: URL:https://developer.apple.com/library/ar chive/documentation/GraphicsImaging/Concep tual/drawingwithquartz2d/dq_context/dq_con text.html [retrieved on 2019-07-22]
- Anonymous: "Quartz 2D - Wikipedia, the free encyclopedia", , 27 May 2016 (2016-05-27), XP055607813, Retrieved from the Internet: URL:https://web.archive.org/web/2016052717 4744/https://en.wikipedia.org/wiki/Quartz_ 2D [retrieved on 2019-07-22]

## Description

### BACKGROUND

This specification relates to data processing and capturing/evaluating interactions with user interfaces of native applications.

User interfaces facilitate user interaction with various resources and applications. For example, user interfaces generally include various interactive elements that enable a user to input data (e.g., using text boxes), make data selections (e.g., using radio buttons, check boxes, or drop down menus), navigate to application pages (e.g., by interacting with an embedded link), and change visual aspects of the user interface (e.g., rotating a device, resizing a window, scrolling to other portions of an application page, or using zoom controls). User satisfaction with a given application can depend on the user's experience interacting with the user interface of the application.

US 2014/280517 is directed to capturing visual data (user interface objects) and non-visual (user interaction, touches, events etc.) interaction data which is transformed into bitmaps (screenshots) and sent together with metadata to a server. An analysis computer retrieves the data and replays the user interaction.

The article "Graphics Contexts" published on 21-03-2017 and retrieved on 22-07-2019 from the URL https://developer.apple.com/library/ archive/documentation/GraphicsImaging/ Conceptual/drawingwithquartz2d/dq_context/dq_context.html, specifies the graphics contexts in iOS.

### SUMMARY

The invention is defined by the independent claims.

Preferred embodiments are defined by the dependent claims.

In general, one innovative aspect of the subject matter described in this specification is embodied in methods that include receiving frame bundles for a user session with a native application. Each frame bundle includes data specifying, for each of one or more points in time, a presentation position of each presentation object used by the native application to generate a user interface of the native application at the point in time. Each presentation object can be an object that generates a visual representation of itself within a portion of the user interface. Each frame bundle also includes, for one or more presentation objects, one or more drawing operations performed to generate the visual representation of the presentation object. Playback data that presents visual changes of the user interface corresponding to the drawing operations performed to generate the visual representation of each presentation object is generated based on the data specified by the frame bundles. Other embodiments of this aspect include corresponding systems, apparatus, and computer programs, configured to perform the actions of the methods, encoded on computer storage devices.

These and other embodiments can each optionally include one or more of the following features. In some aspects, each presentation object can include one of a view or a layer and each frame bundle can include data specifying a hierarchical representation of each view or layer. Generating the playback data includes recreating the visual representation of each presentation object based on the drawing operations used to generate the presentation object.

In some aspects, instrumentation code of the native application can generate each frame bundle, including causing each layer of each presentation object to draw itself to an offscreen drawing context and storing data specifying drawing operations performed to draw each layer of each presentation object in the offscreen drawing context. The drawing context can be a Portable Document Format (PDF) based drawing context and data specifying each drawing operation is stored in a PDF document.

The instrumentation code can cause, for each given presentation object, a drawing library of an operating system on which the native application runs to draw, to the offscreen drawing context, a start marker for the presentation object prior to the view being drawn to the offscreen drawing context and an end marker for the presentation object after the presentation object has been drawn to the offscreen drawing context. The instrumentation code can assign each drawing operation of the offscreen drawing context between the start marker and the end marker to the given presentation object.

In some aspects, each frame bundle can include data specifying one or more user interface events that occurred during the presentation of one or more presentation objects. Generating the playback data can include recreating the one or more user interface events during presentation of the one or more presentation objects.

Particular embodiments of the subject matter described in this specification can be implemented so as to realize one or more of the following advantages. User interactions with a user interface of a native application can be remotely captured and evaluated without negatively impacting the user experience. Evaluation of the user interface can be used to modify the user interface to provide a better user experience. Evaluation of user interactions with the user interface can reveal difficulties that users have interacting with the user interface, and an application developer can playback each session of interest to evaluate how the user interface can be modified to reduce the difficulties users have interacting with the user interface. Customer service representatives can quickly resolve user inquiries regarding a user interface by playing back the user session that is the subject of the user inquiry. For example, the representatives can playback the user sessions in real time while interacting with a user (e.g., during a support call or online chat) to discuss the user sessions. Application developers are provided with information regarding the scope of user interaction with various user interface elements and/or the scope of various conditions (e.g., failed content loads or aborted user sessions) by aggregating information acquired from multiple user sessions.

A web interface (e.g., web browser or WebView) can be used to playback user sessions that occurred on multiple different platforms (e.g., Android^{™}, iOS^{™}, or another operating system). User sessions that occurred on different and incompatible platforms can be unified in the same playback, e.g., the same web interface, allowing for a common user interface to view otherwise incompatible data, and to enable the common user interface to playback and/or search across user sessions that occurred in different operating system (OS) environments. By indexing user sessions based on the platform on which the user session occurred, users can identify user sessions in which particular user actions, user inactions, and/or errors occurred or did not occur, further assisting users in evaluating user interfaces.

In addition, by indexing user sessions based on events that occurred during the user sessions, application developers can search for user sessions in which certain events occurred. The user sessions can then be fast forwarded to the time at which the event occurred to allow for quicker and more efficient evaluation of the user sessions.

Technology described in this document can facilitate evaluation of user interactions with user interfaces using less bandwidth and/or fewer memory resources than would be required without these technologies. For example, less bandwidth and fewer memory resources are used by storing and transmitting data specifying the structure and layout of views used to generate the user interfaces and drawing operations used to generate the views rather than storing screenshots or video of the display itself.

One or more compression or pre-compression techniques can further reduce the amount of bandwidth and memory resources used to facilitate evaluation of the user interactions. For example, data of presentation hierarchies such as view trees or display layer trees can be encoded and stored in frame bundles periodically based on a specified time period. If only a portion of the presentation hierarchy has changed from the previous presentation hierarchy of a previously stored frame bundle, only the changed portion may be stored and transmitted to a server that generates playback data, reducing the amount of data stored and transmitted. In addition, if no (or fewer than a threshold number of) user interactions have been detected at the user interface of the application over a given time period, the time period with which presentation hierarchies are encoded and stored can be increased to reduce the amount of data encoded, stored, and transmitted when there is less user activity with the application.

Images that are normally loaded by an application from the client device (e.g., each time the application is opened) and images that are downloaded from a network (e.g., the Internet) based on content of the application can be identified. The client device can send the image to the server once, e.g., when the application is first initialized at the client device, rather than each time the image is presented on a user interface. For subsequent presentations of the image on the user interface, a unique identifier for the image can be sent to the server in place of the image itself. By storing the images that are normally loaded by the application at the server that generates playback data (or otherwise not transmitting the images from the user device to another device), bandwidth in providing images for playback can be reduced by only transmitting images that are downloaded from the network.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a block diagram of an example environment in which users interact with user interfaces.
FIG. 2 is an illustration of an example user interface for replaying a session.
FIG. 3 is a flow chart of an example process for capturing, encoding, and transmitting data describing user interfaces presented by a native application.
FIG. 4 is a flow chart of an example process for generating and outputting playback data.

Like reference numbers and designations in the various drawings indicate like elements.

### DETAILED DESCRIPTION

Application developers generally want to create applications that have user interfaces that are user friendly so that users will have a positive experience. Having information about user interactions with a given user interface (e.g., an application interface) can help a publisher identify aspects of the user interface that can be changed to improve the user experience. This document discusses obtaining information related to the content presented in users interfaces of an application (e.g., a native application installed on a mobile or tablet device) and user interactions with the user interface of the application, and processing that information to provide an application developer with data that the application developer can use to identify aspects of the user interface that may be modified to contribute to a positive user experience with the user interface. As discussed in detail below, the data provided to the application developer can include session activity data that describes user interactions with the user interface and/or playback data that present visual changes to the user interface during a given user session.

The playback data for a given application can include data that shows mouse movements, mouse hovers, clicks, and other user interactions with the user interface, as well as changes to the user interface (e.g., content that was loaded and/or removed from the user interface) that occurred while a user was interacting with and/or viewing the application. If a user navigated between user interfaces of the application, the playback data can also include data that shows the various user interfaces, e.g., in the order in which they were viewed by the user. Similarly, with respect to touch screen devices, the playback data can include data that show swipes, taps, or other gestures that are performed (e.g., using a finger or pointer, such as a stylus or pen).

The session activity data can include an activity list that details various user interactions with various user interface elements while the user was interacting with and/or viewing the application. The session activity data can also include an activity report that can provide the application developer with an aggregate measure (e.g., total number or portion) of users that performed a specified interaction (e.g., performed a click on a specified button), an aggregate measure of users that failed to perform a specified interaction (e.g., not performing a click on a "continue" button), and/or aggregate measures of users that performed various combinations of interactions and failed to perform various combinations of user interactions.

As discussed below, the application developer is provided an interface that enables the application developer to request session information (e.g., session activity data and playback data) and playback user sessions that meet the criteria specified in the request. Thus, the application developer is provided information on how many (or what portion) of users performed (or didn't perform) one or more specified interactions, how many user sessions included a specified event, and/or view the playback of those user sessions.

In the description that follows, details for implementations in an iOS^{™} environment are provided as examples. iOS^{™} is a mobile operating system created and developed by Apple Inc. The techniques described herein can also be implemented in other environments, including other mobile and non-mobile environments.

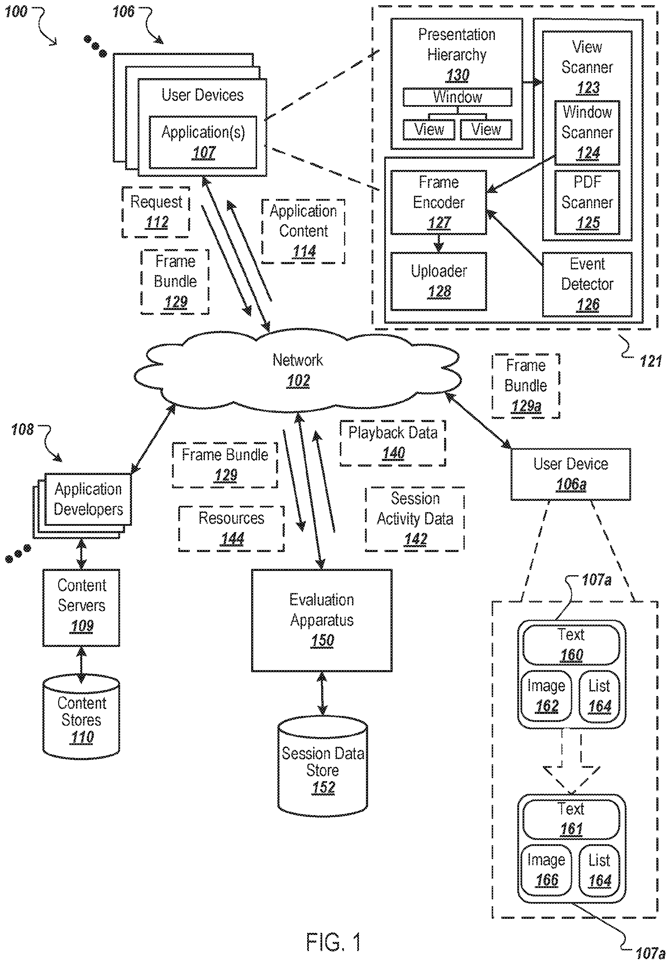

FIG. 1 is a block diagram of an example environment 100 in which users interact with user interfaces. The example environment 100 includes a network 102, such as a local area network (LAN), a wide area network (WAN), the Internet, a mobile network, or a combination thereof. The network 102 connects user devices 106, application developers 108, and an evaluation apparatus 150. The example environment 100 may include many different user devices 106 and application developers 108.

A user device 106 is an electronic device that is capable of requesting and receiving resources over the network 102. Example user devices 106 include personal computers, mobile communication devices, and other devices that can send and receive data over the network 102. A user device 106 typically includes a user application, such as a web browser, to facilitate the sending and receiving of data over the network 102. A user device 106 can also include other applications 107, such as mobile applications that run on mobile devices. The mobile applications can include native applications developed for a particular platform or a particular device, e.g., applications developed for iOS^{™}.

An application 107 can submit content requests 112 to the application developer 108 that developed the application 107 over the network 102. For example, when a user opens the application 107, the application 107 can request images, text, videos, graphics, or other content to be presented by a user interface of the application. The application developer 108 can have one or more content servers 109 that provide application content 114 from one or more content stores 110 (e.g., memory storage devices, such as hard drives, flash memory, etc.) in response to the content requests. An application 107 can also store content at the user device 106. For example, text, images (e.g., of icons or logos), and other types of content that are typically presented each time (or at multiple times) the application 107 is opened can be stored at the user device 106 at which the application 107 is installed or executed. This content can either be stored temporarily or for as long as the application is installed at the user device 106.

An application 107 can include an instrumentation module 121 (e.g., instrumentation code) that collects, stores, and transmits data representing content presented by a user interface of the application 107 and user interactions with the user interface. While the application 107 is running, the instrumentation module 121 can collect the data and store the data at the user device 106. The instrumentation module 121 can compress the data (e.g., by encoding the data) and provide the data to an evaluation apparatus 150, e.g., periodically or based on the amount of data collected and/or compressed.

In some implementations, the instrumentation module 121 is a plug-in to application 107 that is launched when (or before) the application 107 is launched. Specifically, the instrumentation module 121 can be a separate application that is provided by a third-party (e.g., different from an entity that develops and provides the application) and collects the data representing the content presented by at the user interface while the application 107 is running on the user device 106. In some implementations, the instrumentation module 121 includes a library that is launched each time the application 107 is launched.

For example, if the application 107 is an application that runs on iOS^{™}, the instrumentation module 121 can include an iOS^{™} library that is launched each time the application 107 is initialized at a user device 106. The developer can add the library to the application 107 and a reference to the library to the application's information property file (e.g., the application's plist in iOS^{™}) and the instrumentation module 121 can launch each time the application 107 is launched.

The instrumentation module 121 includes a view scanner 123, an event detector 126, a frame encoder 127, and an uploader 128. The view scanner 123 obtains data regarding the content (e.g., colors, images, text, videos, sound, menus, toolbars, etc.) presented by user interfaces of the application during user sessions and stores the data so that the data can be used to playback the user sessions, compute aggregate statistics for user sessions with the user interfaces, and/or other appropriate analytical or diagnostic purposes.

The view scanner 123 includes a window scanner 124 and a Portable Document Format (PDF) scanner 125, which can each be a component of the instrumentation module 121 or a separate plug-in or application. The window scanner 124 can obtain data specifying the structure and layout of a user interface of the application. In some implementations, the window scanner 124 can obtain this data periodically, e.g., multiple times per second, so that the data can be used to playback the user session. The data can include data specifying the layout of windows and views of the windows (e.g., the location of each window and view on screen) and attributes of the windows and views (e.g., one or more classes used to generate the view and attribute(s) of the class(es) such as dimensions, type or font of text, metadata, etc.).

In iOS^{™}, a view is an object that generates a visual representation of itself within a portion a user interface, e.g., within a window of the user interface. Each window can include one or more views. Each view can include a geometric-shaped area (e.g., a rectangle) of the window in which the view generates the visual representation. A view can generate a visual representation of itself on the user interface using one or more drawing operations that draw text, images, video, or other content to the user interface.

In some implementations, the window scanner 124 obtains, for each window, one or more presentation hierarchies 130 that each specifies the hierarchy of presentation objects (e.g., views and/or layers) used to generate the window of the user interface. As used herein, a presentation object is an object of a native application that loads (e.g., draws content) and optionally detects user interaction events (e.g., a mouse click or touch event within the object). Example presentation objects in iOS^{™} include views and layers.

The window scanner 124 can obtain, for each window, data specifying a hierarchy of presentation objects. For example, the window scanner 124 can obtain, for each window, data specifying a hierarchy of views (e.g., a view tree) and/or data specifying a hierarchy of layers (e.g., a display layer tree). A window or view can include sub-views arranged in a tree-like hierarchy with the window being the root of the tree. For example, a view can include a sub-view with text and another sub-view that includes an image. Each view can also be associated with one or more layers that are arranged in a hierarchy. In some implementations for native applications that run on iOS^{™}, the window scanner 124 can obtain the data specifying the structure and layout of the views from the UIView class. The window scanner 124 can store the data for the views (e.g., the view tree) and/or the data for the layers (e.g., the display layer tree) in a temporary cross platform buffer or library, e.g., a FlatBuffer. The use of a FlatBuffer can reduce the amount of memory needed to store the data and increase the speed at which the data is stored and retrieved.

The window scanner 124 can use the presentation hierarchies to identify drawing operations used to generate the presentation objects that use drawing operations. In some implementations, the window scanner 124 causes each presentation object (e.g., view and/or each layer) to draw itself to an offscreen drawing context, offscreen buffer, or other offscreen location. In some versions of iOS^{™}, drawing operations are generally performed in a PDF-like object in Core Graphics called a context. A context represents drawing destinations and contains the information that the drawing system needs to perform any subsequent drawing commands. Each presentation object can draw itself to an onscreen context that is presented on the display of the user device 106.

The window scanner 124 can cause each presentation object to also draw itself to a PDF graphics context that is not presented on the display of the user device 106. The PDF graphics context is a context supported by iOS^{™}. The window scanner 124 can cause a view or layer to draw itself to the PDF graphics context by submitting a request to the view to draw itself to the PDF graphics context. As the views and/or layers draw themselves to the PDF graphics context, a PDF document is generated that includes the data for each drawing operation used to draw the presentation objects. For example, when a particular view or layer draws itself to the PDF graphics context, the Core Graphics PDF engine of iOS^{™} translates the drawing operations for the particular view or layer into PDF commands. The PDF engine can store the translated PDF commands in the PDF document.

The window scanner 124 can create a new PDF document each time the window scanner 124 iterates through a presentation hierarchy. For example, the window scanner 124 can obtain the structure and layout of the user interface (e.g., the view tree and/or display layer tree) periodically based on a specified time period (e.g., every 200 milliseconds, every 300 milliseconds, or another appropriate time period). The view tree and/or layer tree for each period represents a frame (or snapshot) of the user interface at a given point in time. For the purposes of this document, a frame represents a state of the user interface at a given point in time. For example, the user interface can change as a user interacts with the application and each frame represents the state of the user interface at a respective given point in time.

The window scanner 124 can iterate each window of the user interface and, for each window, the presentation hierarchy of the window and generate a PDF document for each obtained user interface structure. In this way, the window scanner 124 can generate, for each frame of the user interface, a PDF document that represents the frame (but does not store a screenshot of the user interface) during a user session. Storing and compressing data for drawing operations rather than bitmaps or pixel data of actual screenshots can significantly reduce the amount of memory used to store the data and the amount of bandwidth used to transmit the data from the user device 106 to the evaluation apparatus 150.

The PDF document for a frame can include a list of drawing commands used to generate the user interface at the given point of time represented by the frame. In some implementations, the window scanner 124 can mark boundaries between presentation objects (e.g., view and/or layers) in a PDF document using markers at the beginning and end of each object's drawing commands. For example, before a particular presentation object draws itself to the PDF graphics context, the window scanner 124 can write, to the PDF document, a unique marker that signals the start of the drawing commands for the particular presentation object. Similarly, after the last drawing command for the particular presentation object is recorded in the PDF document, the window scanner 124 can write, to the PDF document, a unique marker that signals the end of the drawing commands for the particular presentation object.

In some implementations, the window scanner 124 causes a PDF engine, e.g., iOS's Core Graphics PDF engine, to draw start markers and end markers (e.g., unique text strings with start or end labels) to mark the boundaries of each presentation object in the PDF document. For example, before a particular presentation object draws itself to the PDF graphics context, the window scanner 124 can cause the PDF engine to draw a start marker to the PDF document that signals the start of the drawing commands for the particular presentation object. An example start marker may be "BEGIN 5CBF24A9-CEAE-460E-B4A6-C9A597A72442." The label "BEGIN" indicates the start of drawing operations for the particular presentation object and the remainder is a unique text string to the particular presentation object. The unique text string can include a unique identifier, e.g., a universally unique identifier (UUID), for the particular presentation object. Similarly, after the last drawing command for the particular presentation object is recorded in the PDF document, the window scanner 124 can cause the PDF engine to draw an end marker to the PDF document that signals the start of the drawing commands for the particular presentation object. An example start marker may be "END 5CBF24A9-CEAE-460E-B4A6-C9A597A72442." The label "END" indicates the start of drawing operations for the particular presentation object and the remainder is the unique text string to the particular presentation object. This unique text string can also include the same unique identifier for the particular presentation object as the start marker. To draw the text strings, the window scanner 124 can cause the PDF engine to draw a rectangle (or other standard drawing command) and include the unique string in the rectangle. Although "BEGIN" and "END" are used as the labels, other labels can also be used.

In some implementations, the window scanner 124 creates a new PDF page for each view. For example, rather than use begin and end markers as described above, the window scanner 124 can cause the Core Graphics PDF engine to begin a new PDF page to mark the boundaries of each presentation object in the PDF document. In this example, the PDF document for a frame can include a page for each presentation object of the frame.

In some implementations, the window scanner 124 can also identify and discard clipped presentation objects, e.g., views or layers that are not viewable or that are obstructed by other views or layers. For example, an application 107 may have a number of layered views onscreen at a given time. In some cases, large portions of the view tree are completely obscured by other portions of the view tree. The window scanner 124 can identify the presentation object that are completely obscured based on the size, location, and hierarchy of the presentation objects within the window. For example, if two presentation objects overlap on the display and one is in front of the other based on the hierarchy, the one in back would at least be partially obscured. The window scanner 124 can exclude data for completely obscured presentation objects as those presentation objects are not presented at the display of the user device and would not be required for accurate playback. If a presentation object is partially obscured, the window scanner 124 can include data for the presentation object or for the portion that is viewable. This exclusion of obscured content reduces the amount of stored data and the amount of data transmitted to the evaluation apparatus 150, which reduces the amount of consumed network bandwidth and memory resources of the user device 106 and the evaluation apparatus 150.

The PDF scanner 125 can analyze the generated PDF document and identify the corresponding drawing operations for each presentation object (e.g., for each view or layer). For example, the PDF scanner 125 can use the markers in the PDF document to determine which drawing operations correspond to each presentation object. For each presentation object, the PDF scanner 125 can identify in the PDF document the begin marker and the end marker for the presentation object. The PDF scanner 125 can assign each drawing operation in the PDF document between the begin marker and the end marker to the presentation object and store data, e.g., in the FlatBuffer that maps each drawing operation to its corresponding presentation object.

In some implementations, the PDF scanner 125 sends reified drawing operations back to the window scanner 124 so that the window scanner 124 can covert the reified drawing operations to a compressed format, e.g., a compressed binary format, and associate the drawing operations with the appropriate presentation objects in the FlatBuffer tree. The window scanner 124 can provide, for each frame, data specifying the structure and layout of the windows and presentation objects and data specifying the drawing operations for each presentation object to the frame encoder 127. As described below, the frame encoder 127 can associate other events with each frame and compress the data for the frames prior to the data being sent to the evaluation apparatus 150.

The window scanner 124 can assign a unique identifier and/or timestamp information (or sequential ordering information) to each frame. The timestamp information can represent an actual time at which the user interface represented by the frame was presented at the display of the user device 106. The sequential ordering information can represent when the frame was presented relative to other frames presented during the user session. Each presentation object presented in the frame and/or each event detected in the frame can also be assigned by the window scanner 124, the unique identifier and/or a corresponding timestamp or sequential ordering information so that the presentation objects and events for each frame can be presented in the correct order during playback.

In some implementations, the PDF scanner 125 uses glyph mapping techniques to determine the text presented by drawing operations in the PDF documents. For example, the text showing operations for PDFs can use placeholder characters that do not represent the exact Unicode characters. To retrieve the actual Unicode character that was drawn to the PDF document, the PDF scanner 125 can parse the embedded character map (e.g., CMap) that is stored with a subsetted font in the PDF document. This character map can take various forms specified by the PDF and CMap specifications. The PDF scanner 125 can provide the data for each text drawing operation to the window scanner 124 for association with the presentation object in which the text was drawn.

The PDF scanner 125 can also use width mapping techniques to determine the actual printed widths of the fonts of text presented by drawing operations in the PDF documents. The PDF scanner 125 can parse a list of character widths from the embedded fonts in the PDF document to determine the actual printed widths. In some cases, the text showing operations for PDFs do not explicitly use spaces. Instead, a space is created by using an abnormally large inter-character gap between characters. The instrumentation module 121 can write fonts to a test PDF at startup (e.g., when the application 107 is launched) to measure this inter-character gap and cache it for future use by the PDF scanner 125 as a space-detection threshold.

In some implementations, the PDF scanner 125 can also replace the text drawn on-screen with an unintelligible version of the text, e.g., using a lossy hash function or an encrypted version of the text. For example, rather than store the actual text presented on-screen, the PDF scanner and apply a hash function to the text or encrypt the text prior and store the resulting hash value or encrypted text instead of the actual text. In this way, if the text includes private or sensitive information, the text is not presented during playback. In some implementations, the instrumentation module 121 can be placed in a privacy mode in which the PDF scanner 125 replaces the text drawn on-screen with the unintelligible version of the text. At playback time, the stored unintelligible version of the text is used to display placeholders for the text. For example, a black box, rounded rectangle, dots, or another visual representation that indicates where text was replaced can be displayed during playback at the same location as the replaced text was actually presented during the user session.

After the PDF scanner 125 analyzes the PDF document and provides the appropriate data to the window scanner 124, the PDF scanner 125 can delete the PDF document for the frame. This reduces the amount of data stored at the user device 106, which may have limited data storage resources.

In some implementations, the instrumentation module 121 can use method swizzling techniques to track image provenance from the resource level (e.g., images may be cropped or tinted from their original forms), tracking user input events (e.g., touches, button clicks, etc.), and implementing instrumentation code for web views. Method swizzling can be used in Objective-C^{™} applications and involves switching method implementation pointers at runtime to either swap or shim implementations of framework or user code. In general, a shim is a library that can intercept messages or calls (e.g., API calls) and handles the call itself or redirects the call elsewhere.

The instrumentation module 121 can swizzle a set of methods used for drawing images, processing user input events, and/or other appropriate methods. For example, the instrumentation module 121 can access a list of methods to be swizzled when the application 107 is launched. The instrumentation module 121 can determine whether the application 107 uses any of the methods in the list and, if so, swizzle the methods of the application 107 that match the methods in the list.

Swizzling can be used to reduce the amount of memory storage and bandwidth used to store images presented by the application 107 and to transit the images to the evaluation apparatus 150. Swizzling can reduce the number of times an image that may be presented multiple times by the application 107 is uploaded to the evaluation apparatus 150. For example, an image can be uploaded once, e.g., when the application 107 is initialized on the user device 106 for the first time. Thereafter, a placeholder identifier for the image can be used to reference the image rather than uploading the image each time a drawing operation draws the image to the PDF graphics context.

In iOS^{™}, images may pass through a number of different transformations on the way to being loaded to being drawn on-screen. For each transformation operations (including images that may not be sourced from assets), the window scanner 124 can read old provenance metadata from the incoming image and add new provenance metadata to the old provenance data. In this way, the window scanner 124 can create a chain of metadata that can be read from an image. The provenance data can indicate the source of the image (e.g., web address for the image) and data specifying any adjustments made to the image (e.g., cropping, tinting, etc.).

The provenance metadata for an image can be stored as an Objective-C^{™} associated object. Given a pointer to a UI image or CGImage class, the instrumentation module 121 can read or write the metadata directly and be confident that the metadata will exist in the future. Each metadata chunk can contain a JavaScript Object Notation (JSON) object that represents the method call used to create the image. If the window scanner 124 encounters a UIImageView-derived view containing a UIImage with provenance metadata while scanning a view tree, the window scanner 124 can extract this metadata and store the metadata with the drawing operation used to draw along with the placeholder identifier for the image. At playback time, these JSON chunks can be parsed and used to draw the transformed image in the appropriate manner.

Some iOS^{™} applications make use of built-in UIView control classes with simple styling. However, the option exists for these applications to write views that render themselves in a more complex, customized manner. To reduce upload bandwidth when uploading data to the evaluation apparatus 150 from the user devices 106, the window scanner 124 can attempt to capture the provenance for views in the user interface hierarchy that draw themselves. The instrumentation model 121 can swizzle the UIImage draw methods (e.g., drawAtPoint, drawInRect, and drawAsPatternInRect) to detect when a drawing operations takes place. If one of these methods is called on an image with provenance metadata while the window scanner 124 is iterating view trees and requesting views to draw themselves to the PDF drawing context, the window scanner 124 can replace the image draw method call with a placeholder draw call that can be detected by the PDF scanner 125 when scanning the PDF to associate drawing operations with views and to include the drawing operations in the PDF for the frame corresponding to the draw operation. If the methods are called outside of the times that the window scanner 124 is iterating presentation hierarchies (e.g., view trees and/or display layer trees), the instrumentation model 121 can pass the calls to the original method without taking any action.

Some iOS^{™} applications can include web views that embed web content in the application. For example, some iOS^{™} applications use web-type views such as UIWebView or WKWebView classes to embed web content in the application. The instrumentation module 121 may use different techniques to capture data related to user interfaces presented in web views and interactions with user interfaces presented in web views than the instrumentation module 121 uses to obtain data for user interfaces of the application 107 itself. Example techniques for obtaining data related to user interfaces presented in web views and interactions with user interfaces presented in web views are described in U.S. Patent Application No. 14/587,481 titled "Evaluation of Interactions with a User Interface" and filed on December 31, 2014.

For example, the instrumentation module 121 can capture data from web views based on interface data, user interaction data, and mutation data collected from the web views. The interface data specify a structure of a user interface that is presented at a user device during the session. When the user device 106 renders a resource, the interface data can be an initial document object model (DOM) of the resource that is first presented at a user device. For example, the DOM can specify that the resource initially presented text, an image, and a list of links and include contextual data about each of these elements (e.g., text of each element, location of each element, visual characteristics of each element, etc.). The DOM can be provided to the evaluation apparatus 150 once the resource is completely rendered by the user device 106.

Additionally, or alternatively, the DOM can be reconstituted based on mutation data that are provided to the evaluation apparatus 150 as the resource is rendered by the user device 106. For example, the mutation data can specify each element that is rendered by the user device, and the mutation data can be provided to the evaluation apparatus 150 (e.g., either sequentially or in sets of mutation data that were accumulated over a specified time by the user device). Using the mutation data, the evaluation apparatus 150 can reconstitute the DOM in a manner similar to that performed by a browser. The mutation data can be obtained, for example, by inserting a mutation observer script in the code of the resource (or native application). The mutation of observer script can monitor the resource for changes to the structure of the resource, record mutation data representing the changes in local memory at the user device, and provide the mutation data to a specified location (e.g., the evaluation apparatus 150).

The user interaction data for a web view specifies user interactions at the user device with respect to the web view, and includes user interactions with the elements of the user interface. The user interaction data can specify mouse movements, user clicks, mouse hovers, highlights, text inputs, and any other user interactions that are performed at the user device. For example, assume that a user clicks on an item in a list. In this example, the user interaction data will specify that a user click occurred and identify the element of the web view that was clicked. The user interaction data can also include timestamp information and/or sequential numbering information specifying when each user interaction occurred so that the user interaction data can be coordinated with other data. For example, the user interaction data can specify an absolute time at which a given user interaction occurred and/or a number representing when a given user interaction occurred relative to other user interactions a set of user interactions (e.g., user interaction 50 out of 150 total user interactions.

The user interaction data for a web view can be obtained, for example, by inserting an interaction tracking script in the code of the resource (or native application). The interaction tracking script will monitor mouse movement, clicks, and other user actions. In the context of a tablet or other touchscreen device, the interaction tracking script monitor user taps, swipes, pinches, and other user interactions with the touchscreen device.

The mutation data for a web view specify changes to the structure of the user interface that occur during a user session. For example, assume that a user clicks on an item in a list, which causes a first image to be replaced by a second image. In this example, the mutation observer script can detect the removal of the first image and the addition of the second image in the web view, and stored mutation data at the user device 106 specifying that the first image was removed from the web view and that the second image was inserted into the web view. Alternatively, or additionally, the mutation data can directly specify the replacement of the first image by the second image (e.g., rather than specifying both the remove mutation and the add mutation). Periodically, the user device 106 can upload (or otherwise transmit) the mutation data to the evaluation apparatus 150, which processes the mutation data as described in more detail below.

In some implementations, each user interface element of a web view is identified by a number (or a name) corresponding to the order in which the user device rendered the user interface elements. For example, assume that an item from a list that was clicked was the last of 50 elements rendered by the user device when loading a resource. In this example, the mutation data may specify that element 50 was removed from the resource and element 51 was inserted into the resource (e.g., assuming that no other elements were rendered between the rendering of element 50 and the element 51). The mutation data can also include timestamp data, which can be used to correlate the mutation data with other data (e.g., user interaction data). The mutation data can continue to be provided to the evaluation apparatus 150 throughout the user session while a web view is presented, such that the mutation data obtained by the evaluation apparatus represents all changes to the web view over the user session.

In some implementations, the numbering representing the order of user interactions and the numbering representing the order in which the user device rendered the user interface elements are a same numbering sequence. In such implementations, the numbering provides a relative order of both changes to the user interface and user interactions with the user interface. For example, assume that a last page element rendered and given a number of x. Further assume that the next event was a user interaction with the user interface, which led to a subsequent change in the DOM. In this example, the user interaction could be assigned a number x+1 (or some other incremental amount other than 1), and the mutation data corresponding to the change in the DOM could be assigned a number x+2. Thus, the numbering scheme would indicate that the user interaction occurred between the rendering of the last page element and the change in the DOM.

The instrumentation module 121 can install additional instrumentation code (e.g., tracking scripts) in the resources (e.g., web pages) being presented in web views to capture the user interface data for the web views. In some implementations, the instrumentation module 121 also injects a delegate proxy automatically when a web view is created in the application 107. For example, the instrumentation module 121 can swizzle certain methods (e.g., initWithCoder or initWithFrame) that initialize web views and set the delegate on the object before the object is returned.

The delegate is a special type of Objective-C^{™} object that implements special forward methods (e.g., methodSignatureForSelector, respondstoSelector, and forwardInvocation). If the delegate is asked to respond to a selector that either the user's delegate or the instrumentation module 121 wants to handle, the delegate will transparently pass the delegate method to the instrumentation module 121 first, then to the user's code. In this way, the delegate can track when the web view navigates to different resources.

Each time the web view navigates to a different resource, the instrumentation module 121 can re-inject the additional instrumentation code in the different resource. To do so, the delegate can detect when the web view navigates to a new resource based on methods intercepted by the delegate and forwarded to the web view. After detecting the navigation, the instrumentation module 121 can inject the additional instrumentation code into the different resource to track user interface events and collect other data regarding the user interface presented by the resource in the web view (e.g., the Document Object Model (DOM) structure of the resource).

The additional instrumentation code for web views can generate packets of data that specify the captured user interface data for the web view. The delegate can intercept these packets and send them to the instrumentation module 121. The instrumentation module 121 can then store the user interface data for the web view with the appropriate frame (or with the unique identifier for the frame) in which the web view is presented.

In some implementations, the instrumentation module 121 can use method swizzling to identify when the existing drawn information in a view or a layer has been invalidated. The instrumentation module 121 can identify and swizzle view invalidation methods to determine when a view is requesting to be redrawn. For example, each invalidated view may be redrawn at each drawing cycle. If a view has not been invalidated, the view may not need to be redrawn. By swizzling the invalidation methods for the views, the instrumentation module 121 can determine which views are to be redrawn during the next drawing cycle. The window scanner 124 can use this information to skip scanning a view for views in which the view display information has not been invalidated as this indicates that the view has not changed. By skipping unchanged views, the amount of data encoded and transmitted over the network 102 is reduced.

The event detector 126 can detect user interface events (e.g., taps, touches, swipes, etc.) that occur on the user interface of the application 107 using a gesture and/or tap recognizer class. For example, the event detector 126 can use the UIGestureRecognizer and/or UITapGestureRecognizer classes to detect occurrences of user interface events, e.g., by swizzling these classes. Data for the events can be stored with the frame(s) in which the event occurred. This data can include the event itself, the sender of the event, the target of the event, and the action to be performed in response to the event. The data can also include timestamp information so that the data for the events can be coordinated with other data, e.g., during playback of the user session. The data can also include a selector path (e.g., the full selector path) for the event. The selector path can specify each presentation object in a presentation hierarchy that includes the presentation object that drew the object on which the event occurred.

To obtain the selector path for an event, the event detector 126 can intercept certain methods, such as the sendAction method of iOS^{™}. The sendAction method includes parameters including the UIEvent object that includes information about the event that initiated the action message, the sender object that is sending the message (e.g., the UIControl object that invoke the sendAction method), the target object that is to receive the action message, and a selector identifying an action method. The sender object is typically the object (e.g., button) touched or selected by a user. The event detector 126 can walk up from the sender object and build a selector path that includes each presentation object in the presentation hierarchy that includes the presentation object that drew the sender object. The event detector 126 can store the data for each event (including the event itself, the sender object, the target object, and the selector path) and provide the data to the frame encoder 127.

The instrumentation module 121 can map selectors for events and selectors for presentation objects to corresponding virtual HTML elements. For example, the instrumentation module 121 can attempt to map view classes and attributes (for events and view trees) to corresponding virtual HTML elements. In some implementations, the instrumentation module 121 maps the iOS^{™} attribute "accessibilityIdentifier" (which associate a unique identifier with elements in a user interface) to the HTML attribute "id" (which specifies a unique identifier for an HTML element). The instrumentation module 121 can also map the iOS^{™} attribute "accessibilityLabel" (which is a label for the accessibility element) to the HTML element "label" (which represents a caption for an item).

The instrumentation module 121 can also generate attributes to include in a selector for a presentation object. For example, if the presentation object is part of an iOS^{™} storyboard, the instrumentation module 121 can generate an attribute "tag" that is an integer that identifies a view object and an attribute "storyboard" attribute that specifies the storyboard in which the view was created. For example, the virtual selector for a class named "MyCustomLabel" that comes from the "Main" storyboard might have a virtual selector that looks like:
"MyCustomLabel#name_label[story_board="Main"] [tag=" 1"] [label="Full name"]". By mapping iOS^{™} attributes to HTML elements, the events and views can be indexed with the virtual HTML elements so that users can search for particular types of events and retrieve playback data for user sessions in which the events occurred.

The frame encoder 127 can receive data from the window scanner 124 and the event detector 126 and generate frame bundles 129 that include the data or a compressed version of the data. Each frame bundle 129 can include data for one or more frames. The frame encoder 127 can send each frame bundle 129 to the uploader 128. In turn, the uploader 128 transmits the frame bundles 129 to the evaluation apparatus 150 over the network 102.

The frame encoder 127 can encode and/or compress data for frames prior to transmitting the data to the evaluation apparatus 150. For example, the frame encoder 127 can encode the data for each frame bundle 129 using binary encoding. The frame encoder 127 can store each frame bundle in a FlatBuffer format.

The frame encoder 127 can encode the data for each frame bundle 129 in a byte stream that contains a series of operators. Each series of operators can include a set of tokens identified by a byte value. Each drawing operator can select from any combination and order of the tokens and assign whatever meaning it wants at recording/rendering time. Records are implicitly defined by the presence of an operator canvas token. The first byte in a record starts a new record. Thus, the first record will omit the explicit operator canvas token identifier and simply record the operator itself.

The frame encoder 127 can pre-process at least some of the data prior to encoding or after encoding. For example, only a portion of a presentation hierarchy (e.g., view tree or display layer tree) may change from a first frame to a subsequent frame. The frame encoder 127 can evaluate the presentation hierarchies to identify each presentation object that changed from the first frame to the subsequent frame. Rather than provide data of the entire presentation hierarchy for both frames, the frame encoder 127 can include data of the presentation hierarchy for the first frame. For the subsequent frame, the frame encoder 127 can provide data of the presentation objects that changed relative to the presentation objects of the first frame. If a frame and a subsequent frame are exactly the same, the frame encoder 127 may only provide data for one of the frames, e.g., along with data indicating that the other frame is the same. These techniques reduce the amount of data encoded and transmitted over the network 102, thereby increasing the speed at which data is encoded, reducing the amount of processing power of the user device 106 used to encode the data, and reducing the amount of network bandwidth used to transmit the data to the evaluation apparatus 150.

Instead of rendering each frame directly into the final frame bundle FlatBuffer, the frame encoder 127 can render the frame into a temporary buffer. This allows the frame encoder 127 to compare the presentation hierarchy of the current frame to the presentation hierarchy from the previous frame. If the two presentation hierarchies are identical, the frame encoder 127 can re-use the encoding of the presentation hierarchy from the previous frame, saving a significant amount of bandwidth. In some cases, the entire presentation hierarchy of a previous frame can be re-used such that only metadata for the frame is stored in the frame bundle 129.

The frame encoder 127 can compare two frames at the view or layer level. For example, the frame encoder 127 can compare the binary encoding of a view's drawing operations to the binary encoding of the same view's drawing operations in a previous frame. If the encoding is the same for a particular view, the frame encoder 127 may only keep the binary encoding for one of the views.

The frame encoder 127 can also compress strings of text. For example, it may be more efficient to encode strings of text in a separate string table and reference the strings using an identifier, e.g., a 32-bit identifier, than to send the original strings of text. Each time a string of text is to be stored in the FlatBuffer, a numeric string identifier can be stored in the FlatBuffer instead of the actual string of text. This allows the frame encoder 127 to try to encode each string once per frame bundle. During the frame encoding process, the frame encoder 127 can maintain a strong reference to each of the strings and then convert the strong reference to a weak reference after the string has been fully encoded. This allows the operating system of the user device 106 to reclaim string memory where possible.

Each type of data can be stored together in the FlatBuffer to maximize or improve impression relative to storing the data for each frame together in the FlatBuffer. For example, the frame encoder 127 can also store all the strings of text in a single part of the FlatBuffer so that portions of the strings between different entries in the string table can be re-used when the data is compressed. Similarly, the drawing operations for the presentation objects can be stored in a single part of the FlatBuffer. The frame encoder 127 can then compress the data in the FlatBuffer, e.g., using GZip compression. In this way, the network bandwidth consumption is reduced and the amount of memory resources of the user device 106 and the evaluation apparatus 150 used to store the frame data can be reduced.

The evaluation apparatus 150 can store each frame bundle 129 in a session data store 152 and use the data to generate playback data 140 and session activity data 142, as described below. The evaluation apparatus 150 can also index the frames and user interface events of each frame so that users (e.g., application developers 108) can search for user sessions in which particular events occurred. For example, each event can be indexed with the selectors and data describing the event. In this way, a user can search for events in which particular objects (e.g., buttons) were selected as the objects are part of the selector path for the event.

The evaluation apparatus 150 receives the frame bundles 129 from the user device and generates, for each user session, playback data 140 and session activity data 142 for the user session. The evaluation apparatus 150 can provide the playback data 140 and the session activity data 142 to the application developer 108 that developed the application 107 at which the user session occurred.

The playback data 140 presents the application developer 108 with visual changes to an application 107a during the user session and other user activity (e.g., mouse movements) that occurred during the session. At least a portion of the visual changes to the application 107a correspond to changes in presentation hierarchies and the content presented for each presentation object of the presentation hierarchy during the user session. For example, the playback data 140 can show the application developer 108 pointer (e.g., mouser or finger) movement over the application 107a, a user click (including a tap or press) on an item from the list 164, and the replacement of the image 162 with the image 166. In this example, the replacement of the image 162 with the image 166 can correspond to change of an image view from presenting the image 162 in one frame to presenting the image 166 in a subsequent frame. Similarly, the replacement of text 160 with text 161 can correspond to a change in a text view of the view tree from presenting text 160 in one frame to presenting the text 161 in a subsequent frame.

The session activity data can present to the application developer 108 a list of events that occurred during the user session. For example, the list of events can specify that two events Ev1 and Ev2 occurred during the user session. Ev1 can correspond to the initial loading of the application 107a, and Ev2 can correspond to the click on the item from the list 164. As playback of the user session is presented (e.g., showing mouse movements and visual changes) the list of events can be highlighted to show which event corresponds to the visual changes that are being presented by the playback data. For example, upon initial playback of the user session, Ev1 can be highlighted indicating that the visual representation of the application 107a corresponds to the initial loading of the application 107a. Once playback of the user session reaches the point where the user clicked on the item from the list 164, Ev2 can be highlighted indicating that the replacement of the image 162 with the image 166 corresponds with the click on the item from the list 164. As discussed in more detail below, the session activity data can also include contextual data corresponding to the user click on the item from the list, e.g., text of the clicked item, which changes to the application 107a correspond to the user click, and/or requests for other application user interfaces that occurred during the user session.

The event evaluation apparatus 150 can create playback data 140 for a user session using the data in the frame bundles 129 received for the user session. In some implementations, the event evaluation apparatus 150 creates the playback data 140 by redrawing each frame of the user session using the data specifying the layout and structure of the presentation objects (e.g., views and/or layers) in the frame, the drawing operations used to generate each presentation object of the frame, and the events that occurred during the presentation of the user interface represented by the frame. For example, the event evaluation apparatus 150 can draw a frame by identifying each presentation object for the frame and rendering each presentation object in the canvas based on the drawing operations used to generate each presentation object as specified by the data in the frame bundle 129 for the frame. In a particular example, the evaluation apparatus 150 can use the timestamp information for the drawing operations to process each drawing operations in order and recreate the presentation objects based on the drawing operations. For example, if a fist drawing operation is to present an image in a first location and a second drawing operation is to present a text caption in a second location below the image, the evaluation apparatus 150 can process these drawing operations to draw the image in a location that corresponds to the first location and to draw the text caption in the second location.

For example, if the presentation hierarchy for a frame includes a text view that includes text, the evaluation apparatus 150 can identify the text view and its display position from the view tree data and identify the text from the text table of the frame bundle and the identifier for the text. If the text was rendered with a custom font, the evaluation apparatus 150 can also use the typeface assigned to the text to render the text in its custom font. The evaluation apparatus 150 can then draw the text on the canvas using the data. If the text was replaced by an unintelligible version of the text, the evaluation apparatus 150 can detect the hash or encrypted version of the text and present, during playback, a black box or other visual representation that indicates where text was replaced. The evaluation apparatus 150 can render other types of views, e.g., image views in a similar manner.

The evaluation apparatus 150 can also cause visual presentation of user interactions with the user interface. For example, the user interactions can include a pointer movement, a user click, a user tap, a user swipe, a zoom, a scroll, a focus, or a text entry. For a user swipe, the playback data 140 can include data that represent a path of the swipe over a period of time based on detected touch points in successive frame bundles 129. For example, a sequence of frame bundles can each include a touch event along the line of the swipe, e.g., based on data obtained from UIGestureRecognizer and/or UITapGestureRecognizer classes that detected the touch events. The evaluation apparatus 150 can interpolate the position of the swipe between frames based on the location of the swipe in successive frame bundles 129. For example, a location of a swipe may be at point A in a first frame represented by a first frame bundle and the location of the swipe may be at point B in a second frame immediately following the first frame. In this example, the evaluation apparatus 150 may interpolate the location of the swipe between frames to present the swipe moving from point A to point B. The evaluation apparatus 150 can use Hermite splines to estimate the movement of a swipe of other gestures across the display.

In some implementations, the evaluation apparatus 150 can interpolate other changes to the user interface between frames. For example, the instrumentation module 121 may collect data periodically based on a time period that is greater than a time period between frames during playback. In a particular example, the instrumentation module 121 may collect data and generate a frame bundle five times per second (or at another appropriate rate) and the playback may be presented at ten frames per second. In this example, the evaluation apparatus 150 can interpolate between each pair of successive frames to playback ten frames per second. For example, the evaluation apparatus 150 can interpolate scrolling, swipes, changes in positions/size of presentation objects of the presentation hierarchies, canvas translations, changes in text, and/or other appropriate content.

In some implementations, the evaluation apparatus 150 presents playback data in a web browser environment. In this example, the evaluation apparatus 150 can translate the application's canvas to an HTML canvas. For example, the evaluation apparatus 150 can unpack FlatBuffer-encoded frame bundles to a script (e.g., JavaScript) format before playback. The evaluation apparatus 150 can playback a user session in real time, e.g., in a web browser, so that a customer service representative can view the playback while discussing the user session with a user of the user session.

The evaluation apparatus 150 can also generate session activity data 142 for at least some of the user interactions that occurred during the user session. The session activity data 142 can specify, for example, a list of various user events (e.g., clicks, text entry, icons selected, etc.) that occurred and any environmental data (e.g., accelerometer data) corresponding to the user interaction, e.g., that was collected by the instrumentation module 121 and stored in frame bundles during the user session.

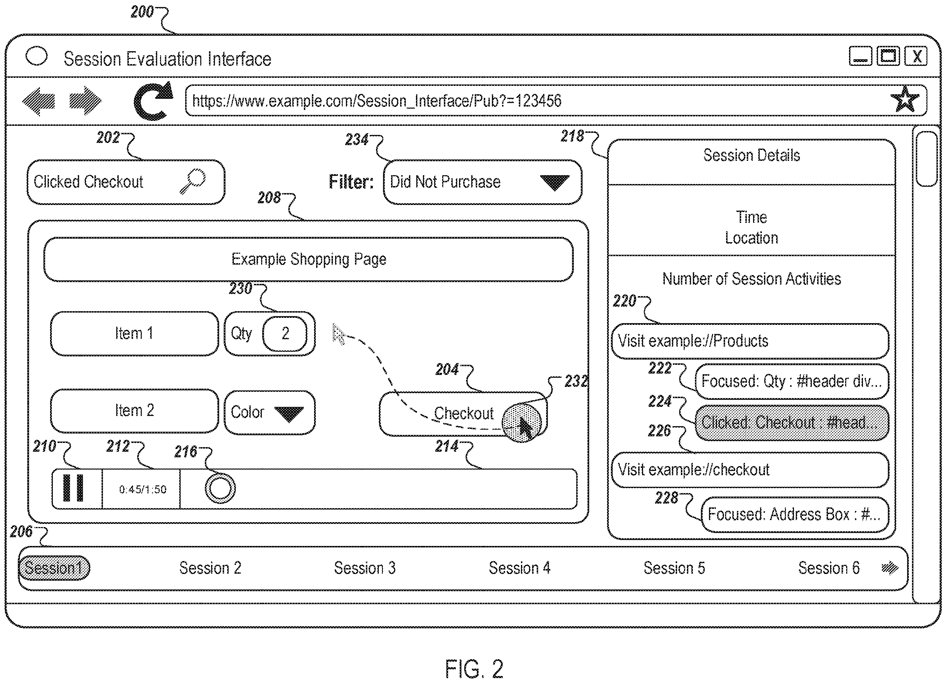

FIG. 2 is an illustration of an example user interface 200 for replaying a user session. The user interface 200 includes a search field 202 that receives search criteria for identifying sessions. For example, assume that an application developer is interested in identifying and/or viewing sessions during which a user clicked a checkout button 204 of a given native application. The user enters the search phrase "clicked checkout" in the search field 202. Upon submission of the search phrase (e.g., inputting and enter command or clicking on a submission button), a request for session information is transmitted to the evaluation apparatus 150, which may include a search apparatus. The request for session information can include, for example, the search phrase, and identity of the application developer requesting the session information, and/or other information that provides context associated with the request.

In response to receiving the request for session information, the evaluation apparatus 150 can use the search phrase "clicked checkout" to identify one or more sessions during which a user clicked the checkout button 204 of the given native application. In some implementations, the evaluation apparatus 150 identifies sessions responsive to the search phrase from an index of user sessions. For example, the index may include one or more entries associating the user action "click" and the user interface element "checkout button" with sessions during which a user clicked on the "checkout" button 204.

The evaluation apparatus 150 provides data identifying sessions responsive to the request for session information to the requesting device. In some implementations, the evaluation apparatus 110 can respond to the request for session information by providing data about one or more sessions that were identified based on the search phrase. Continuing with the example above, the evaluation apparatus 150 can provide a list of sessions 206 that were identified from the index based on the search phrase "clicked checkout." As illustrated by FIG. 2, the sessions in which a user clicked a checkout button include Session 1, Session 2, Session 3, Session 4, Session 5, and Session 6.

The evaluation apparatus 150 can also provide playback data and session activity data for one or more of the identified sessions in response to the request for session information. For example, as illustrated by FIG. 2, Session 1 is shaded, indicating that playback data for Session 1 is available for replay, and that session activity data for Session 1 are available for presentation.

The user interface 200 includes a playback region 208 in which previous sessions are replayed based on the playback data. The playback region 208 includes a playback bar, which includes a play/pause portion 210, a counter 212, and a slider portion 214. The play/pause portion 210 enables an application developer to start and stop replay of the session by interacting with the play/pause portion 210. The counter 212 provides a total duration of the session (e.g., 1 minute 50 seconds) and a portion of the session that is currently being presented (e.g., 45 seconds). The slider portion 214 enables an application developer to quickly move to other portions of the session by sliding a sliding element 216 within the slider portion 214. Continuing with the example above, the playback region 208 is replaying Session 1, as indicated by the shading of Session 1 in the list of sessions.

The user interface 200 includes a session activity region 218 in which activities that occurred during the session being replayed are presented based on the session activity data. For example, the session activity region 218 presents information such as a time at which the session being replayed occurred (e.g., a day, date, time of day, and/or year) and/or a geographic location of the user device at which the user session occurred. The session activity region 218 can also present a number of activities (e.g., a number of clicks, focuses, page navigations, or other user interactions) that occur during the session.

The session activity region 218 also identifies and/or outlines various activities that occurred during the user session being replayed. For example, the session activity region 218 specifies that, during the session being replayed in the playback region 208 the user navigated to application page example://products 220 of an example application, focused on a Qty element within the application page 222, clicked the checkout button 224, navigated to application page example://checkout 226, and focused on an address box 228. The activities listed in the session activity region 218 can be arranged in the order in which they occur during the session. For example, the activity 220 occurred prior to the activities 222, 224, 226, and 228. Additionally, the activities listed in the session activity region 218 can be visibly represented in a hierarchical manner. For example, each of the activities 222 and 224 are offset to the right relative to the activity 220, thereby indicating that the activities 222 and 224 occurred during the visit to application page example://products 220.

The list of activities 218 can also provide contextual data regarding the activity. For example, activity 222 indicates that the user interaction "focus" occurred with the Qty user interface element 230. The list of activities 218 can also provide environmental information associated with the activities. For example, if the accelerometer data indicates that the user device was being shaken when an activity occurred, the list of activities may include "fru strated."

As replay of the session proceeds in the replay region 208, activity corresponding to the portion of the replay being presented can be highlighted. For example, after the user focuses on the Qty element 230, the user clicked on the checkout button 204. As the replay shows the mouse moving from near the Qty element 230 to the checkout button 204 (as illustrated by the dashed line), the activity 224 can be shaded (or highlighted) indicating the session activity that corresponds to the portion of the session currently being replayed. When the replay of the session reaches a point at which the user clicked the checkout button 204, the playback data can cause a shaded circle 232 (or some other graphical element) to be presented, thereby visually conveying to the publisher that the user click occurred and a location of the user click on the checkout button 204. Similar animations can be used to visually convey to the publisher that other interactions occurred. For example, with reference to a touchscreen device, a similar shaded circle can be used to visually convey the occurrence of a user tap, and elongated shading animation can be used to illustrate a user swipe or other finger movement on the touchscreen.

As discussed above, an application developer can request replay of one of the other sessions (e.g., Session 2) from the user interface 200 (or another user interface). For example, user interaction with (e.g., a click of) Session 2 in the list of sessions 206 can initiate a request for session information about Session 2. In response to the request, the evaluation apparatus 150 can output, to the requesting device, playback data and session activity data related to Session 2. Upon receipt of the playback data and session activity data, the requesting device can replay Session 2 in the replay region 208, and present information about the activities that occurred during Session 2 in the session activity region 218.

In some implementations, the user interface 200 can include a filter element 234. The filter element 234 enables an application developer to filter sessions identified using, for example, the submitted search phrase. For example, an application developer may be interested in identifying only the sessions during which a user clicked on the checkout button 204, but did not ultimately make a purchase. In this example, the user can submit the search phrase "clicked checkout," and interact with the filter element 234 to select a filter that identifies only those sessions during which the user did not make a purchase (e.g., by clicking on a drop-down button and selecting the "did not purchase" option). This enables the application developer to quickly identify sessions of interest, and/or identify what might have prevented these users from making a purchase (e.g., issues with the user interface). For example, an application developer can specify a series of session attributes to characterize the specific types of user sessions that the application developer would like to review.

An example filter is provided here for purposes of illustration, but various other filters can be used and specified as desired. For example, publishers may be interested in evaluating only those sessions that were performed in a specific geographic region (e.g. Southeast United States, Central America, Europe) or only those sessions during which a user terminated the session prior to some specified duration (e.g., within 2 minutes). Providing filters such as these and/or analytic information related to sessions identified using filters can provide an application developer with insight regarding how to better format their user interface and/or achieve specific business goals (e.g., increase sales).

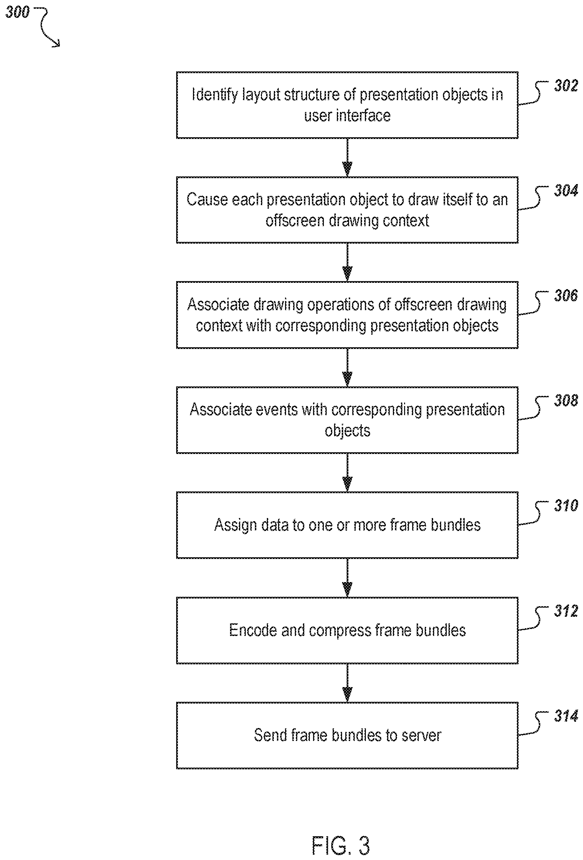

FIG. 3 is a flow chart of an example process 300 for capturing, encoding, and transmitting data describing user interfaces presented by a native application. Operations of the process 300 can be performed, for example, by one or more data processing apparatus, such as the user device 106. Operations of the process 300 can also be implemented as instructions stored on a non-transitory computer readable medium. Execution of the instructions cause one or more data processing apparatus to perform operations of the process 300.

The layout and structure of presentation objects in a user interface are identified (302). For example, an instrumentation module can obtain the structure and layout of views, layers, and/or other appropriate presentation objects of a user interface of an application currently being presented by the application. This data may be in the form of one or more presentation hierarchies (e.g., view trees and/or display layer trees) that represent the hierarchy of views used to generate the user interface. The layout of the presentation objects can specify the location on screen of each presentation object.

Each presentation object draws itself to an offscreen drawing context (304). The instrumentation module can request each presentation object to draw itself to an offscreen drawing context. In some implementations, the offscreen drawing context is a PDF graphics context that is not presented on screen. Instead, when each presentation object draws itself to the PDF graphics context, a PDF engine can include, in a PDF document, the drawing operations used to generate the presentation object. The instrumentation module can iterate over the presentation hierarchies and cause each presentation object to draw itself to the offscreen drawing context.

The drawing operations of the offscreen drawing context are associated with their corresponding presentation objects (306). As described above, markers can be used in the PDF document to indicate which drawing operations correspond to which presentation object. The instrumentation module can use the markers to identify, for each presentation object, the drawing operations (if any) used to generate the presentation object and associate the identified drawing operations with the presentation object.

User interface events are associated with the presentation objects (308). For example, the instrumentation module can detect events, such as taps, clicks, etc. The instrumentation module can also obtain a selector path for each event. The instrumentation module can determine the source of the event using the selector path and associate the event with the source. The source of the event may be an object, e.g., a button, presented in a particular presentation object that is also specified in the selector path. The instrumentation module can associate the event with the particular presentation object specified in the selector path.

The data specifying the layout and structure of the user interface, the drawing operations used to generate the presentation objects, and the detected events are assigned to one or more frame bundles (310). A frame bundle includes data for one or more frames of the application. The frame bundles can be stored in a FlatBuffer.

The frame bundles are encoded and compressed (312). For example, the instrumentation module can encode the frame bundles using binary encoding. The instrumentation module can compress the frame bundles using one or more compression techniques, e.g., GZip compression. As described above, the data can be pre-processed to maximize or improve the compression, e.g., by storing certain types of data together prior to compression.

The frame bundles are sent to a server (314). For example, the frame bundles may be sent to an evaluation apparatus that indexes the data in the frame bundles, stores the indexed data, and generates playback data to playback the user session.

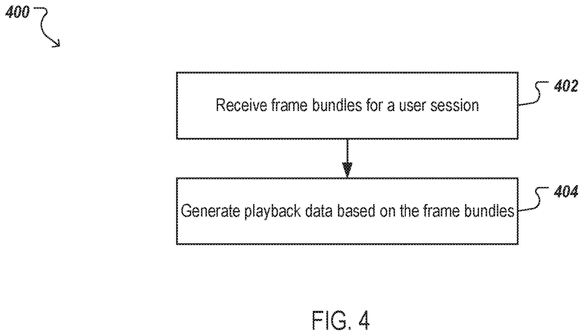

FIG. 4 is a flow chart of an example process 400 for generating and outputting playback data. Operations of the process 400 can be performed, for example, by one or more data processing apparatus, such as the evaluation apparatus 150. Operations of the process 400 can also be implemented as instructions stored on a non-transitory computer readable medium. Execution of the instructions cause one or more data processing apparatus to perform operations of the process 400.

Frame bundles for a user session are received (402). In some implementations, an instrumentation module is launched at a user device when an application is opened. The instrumentation module can collect data for one or more displayed frames of the application's user interface during the user session with the application. For example, the instrumentation module can collect, for each frame, data of a presentation hierarchy (e.g., view tree and/or display layer tree) used by the application to generate the user interface, drawing operations used to generate the visual representation of each presentation object of each presentation hierarchy, data describing events (e.g., user clicks, scrolls, swipes, selections of icons, etc.), and other data as described above.

Playback data is generated based on the data included in the frame bundles (404). For example, each frame may be redrawn in a canvas (e.g., an HTML canvas) based on the data included in the frame bundle for the frame. In some implementations, additional frames may be generated by interpolating two consecutive frames, e.g., to meet a playback rate of a web browser in which the playback will be presented.

During or before playback, compressed data may be decompressed. For example, if a particular frame bundle includes only one or more changed presentation objects of a presentation hierarchy that were changed from a prior frame, decompression can include using the presentation object of the presentation hierarchy of the prior frame in combination with the changed views to generate the playback of the frame for the particular frame bundle.

During playback, the frames can be recreated and presented in the order in which they were recorded to simulate the actual user session. For example, the drawing operations for each frame can be processed and recreated on the canvas to recreate the presentation of each frame. The frames can be processed in order to create the playback of the frames such that the playback appears to be a real-time playback of the user session. Events that occurred, e.g., tap events, can also be presented based on the event data specified in the frame bundles for the user session. For example, the timestamp information (or frame bundle information) can be used to correlate the events with the corresponding frames being drawn to the canvas.

If the application included a web view during the user session, the contents of the resource and any user interactions with the resource can also be presented during the playback. In some implementations, the evaluation apparatus can cut a window of a canvas that is presenting the views of the application during playback and present the web content of the web view in the window. The window can be in the same (or a similar location) as the web view of the application during the user session.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage medium for execution by, or to control the operation of, data processing apparatus. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML, page) to a client device (e.g., for purposes of displaying data to and receiving user input from a user interacting with the client device). Data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A computer implemented method for evaluating interactions with a user interface of a native application (107) running on a user device (106) comprising:
receiving (402) from the user device (106) a plurality of frame bundles (129) for a user session with the native application (107), wherein each frame bundle comprises, for each of one or more frames representing a respective state of the user interface of the native application at a respective point in time, data specifying
i) a layout of presentation objects used by the native application to generate the user interface of the native application at the respective point in time, wherein the layout of the presentation objects specifies a location of each presentation object, each presentation object being an object that generates a visual representation of itself within a portion of the user interface, and
ii) for one or more of the presentation objects, one or more drawing operations performed to generate the visual representation of the one or more presentation objects; and
generating (404), based on the data specified by the plurality of frame bundles, playback data (140) that presents visual changes of the user interface corresponding to the drawing operations performed to generate the visual representation of each presentation object, wherein generating the playback data comprises redrawing the frames included in the frame bundles for the user session using the data specifying i) the layout of presentation objects in the frame and ii) the drawing operations used to generate each presentation object in the frame such the playback data represents a real-time playback of the user session, the redrawing comprising, for each frame,
i) identifying each presentation object for the frame and
ii) rendering each presentation object at a respective location in a canvas based on drawing operations used to generate each presentation object as specified by the data in the frame bundle for the frame.

2. The method of claim 1, wherein each presentation object comprises one of a view or a layer and wherein each frame bundle includes data specifying a hierarchical representation of each view or layer.

3. The method of claim 1, wherein generating the playback data comprises recreating the visual representation of each presentation object based on the drawing operations used to generate the presentation object.

4. The method of claim 1, wherein instrumentation code of the native application generates each frame bundle, including causing each layer of each presentation object to draw itself to an offscreen drawing context and storing data specifying drawing operations performed to draw each layer of each presentation object in the offscreen drawing context.

5. The method of claim 4, wherein the drawing context is a Portable Document Format (PDF) based drawing context and data specifying each drawing operation is stored in a PDF document.

6. The method of claim 4, wherein the instrumentation code causes, for each given presentation object, a drawing library of an operating system on which the native application runs to draw, to the offscreen drawing context, a start marker for the presentation object prior to the view being drawn to the offscreen drawing context and an end marker for the presentation object after the presentation object has been drawn to the offscreen drawing context.

7. The method of claim 6, wherein the instrumentation code assigns each drawing operation of the offscreen drawing context between the start marker and the end marker to the given presentation object.

8. The method of claim 1, wherein:
each frame bundle includes data specifying one or more user interface events that occurred during the presentation of one or more presentation objects; and
generating the playback data comprises recreating the one or more user interface events during presentation of the one or more presentation objects.

9. The method of claim 1, wherein the one or more drawing operations comprise operations that draw text, images, video, or other content to the user interface.

10. The method of claim 1, wherein the one or more drawing operations are performed in a drawing context.

11. A system, comprising:
a data store; and
one or more computers that interact with the data store and execute instructions that cause the one or more computers to perform operations according to the method of any one of claims 1 to 10.

12. A non-transitory computer readable medium storing instructions that upon execution by one or more computers cause the one or more computers to perform operations according to the method of any one of claims 1 to 10.

## Patentansprüche

1. Computerimplementiertes Verfahren zum Auswerten von Interaktionen mit einer Benutzerschnittstelle einer nativen Anwendung (107), die auf einem Benutzergerät (106) läuft, umfassend
Empfangen (402) einer Mehrzahl von Rahmenbündeln (129) für eine Benutzersitzung mit der nativen Anwendung (107) von dem Benutzergerät (106), wobei jedes Rahmenbündel für jeden von einem oder mehreren Rahmen, die einen jeweiligen Zustand der Benutzerschnittstelle der nativen Anwendung zu einem jeweiligen Zeitpunkt repräsentieren, Daten umfasst, die Folgendes vorgeben
i) ein Layout von Präsentationsobjekten, das von der nativen Anwendung verwendet wird, um die Benutzerschnittstelle der nativen Anwendung zu dem jeweiligen Zeitpunkt zu erzeugen, wobei das Layout der Präsentationsobjekte eine Position jedes Präsentationsobjekts vorgibt, wobei jedes Präsentationsobjekt ein Objekt ist, das eine visuelle Repräsentation von sich selbst innerhalb eines Teils der Benutzerschnittstelle erzeugt, und
ii) für ein oder mehrere der Präsentationsobjekte eine oder mehrere Zeichnenoperationen, um die visuelle Darstellung des einen oder mehrerer Präsentationsobjekte zu erzeugen; und
Erzeugen (404) von Wiedergabedaten (140) basierend auf den Daten, die durch die Mehrzahl von Rahmenbündeln vorgegeben sind, die visuelle Änderungen der Benutzerschnittstelle entsprechend den Zeichnenoperationen präsentieren, die durchgeführt werden, um die visuelle Repräsentation jedes Präsentationsobjekts zu erzeugen, wobei das Erzeugen der Wiedergabedaten das Neuzeichnen der Rahmen umfasst, die in den Rahmenbündeln für die Benutzersitzung enthalten sind, wobei die Daten vorgeben i) das Layout der Präsentationsobjekte in dem Rahmen und ii) die Zeichnenoperationen, die verwendet werden, um jedes Präsentationsobjekt in dem Rahmen zu erzeugen, vorgeben, so dass die Wiedergabedaten eine Echtzeitwiedergabe der Benutzersitzung präsentieren, wobei das Neuzeichnen für jeden Rahmen umfasst,
i) Identifizieren jedes Präsentationsobjekts für den Rahmen und
ii) Rendem jedes Präsentationsobjekts an einer jeweiligen Position in einem Canvas basierend auf Zeichnenoperationen, die verwendet werden, um jedes Präsentationsobjekt wie durch die Daten im Rahmenbündel für den Rahmen angegeben zu erzeugen.

2. Verfahren nach Anspruch 1, wobei jedes Präsentationsobjekt entweder eine Ansicht oder eine Lage umfasst und wobei jedes Rahmenbündel Daten enthält, die eine hierarchische Repräsentation jeder Ansicht oder Lage vorgeben.

3. Verfahren nach Anspruch 1, wobei das Erzeugen der Wiedergabedaten das Wiederherstellen der visuellen Repräsentation jedes Präsentationsobjekts basierend auf den Zeichnenoperationen umfasst, die verwendet wurden, um das Präsentationsobjekt zu erzeugen.

4. Verfahren nach Anspruch 1, wobei der Instrumentierungscode der nativen Anwendung jedes Rahmenbündel erzeugt, einschließlich des Veranlassens jeder Lage jedes Präsentationsobjekts, sich selbst in einen Offscreen-Zeichnenkontext zu zeichnen, und des Speicherns von Daten, die Zeichnenoperationen vorgeben, die durchgeführt werden, um jede Lage jedes Präsentationsobjekts in den Offscreen-Zeichnenkontext zu zeichnen.

5. Verfahren nach Anspruch 4, wobei der Zeichnenkontext ein auf dem Portable Document Format (PDF) basierender Zeichnenkontext ist und Daten, die jede Zeichnenoperation vorgeben, in einem PDF-Dokument gespeichert werden.

6. Verfahren nach Anspruch 4, wobei der Instrumentierungscode für jedes gegebene Präsentationsobjekt eine Zeichnenbibliothek eines Betriebssystems, auf dem die native Anwendung läuft, veranlasst, in den Offscreen-Zeichnenkontext eine Startmarkierung für das Präsentationsobjekt zu zeichnen, bevor die Ansicht in den Offscreen-Zeichnenkontext gezeichnet wird, und eine Endmarkierung für das Präsentationsobjekt, nachdem das Präsentationsobjekt in den Offscreen-Zeichnenkontext gezeichnet worden ist.

7. Verfahren nach Anspruch 6, wobei der Instrumentierungscode jede Zeichnenoperation des Off-Screen-Zeichnenkontextes zwischen der Startmarkierung und der Endmarkierung dem gegebenen Präsentationsobjekt zuweist.

8. Verfahren nach Anspruch 1, wobei:
jedes Rahmenbündel Daten enthält, die ein oder mehrere Benutzerschnittstellenereignisse vorgeben, die während der Präsentation eines oder mehrerer Präsentationsobjekte aufgetreten sind; und
das Erzeugen der Wiedergabedaten das Wiederherstellen des einen oder mehrerer Benutzerschnittstellenereignisse während der Präsentation des einen oder mehrerer Präsentationsobjekte umfasst.

9. Verfahren nach Anspruch 1, wobei die eine oder mehrere Zeichnenoperationen Operationen umfassen, die Text, Bilder, Video oder andere Inhalte auf die Benutzerschnittstelle zeichnen.

10. Verfahren nach Anspruch 1, wobei die eine oder mehrere Zeichnenoperationen in einem Zeichnenkontext durchgeführt werden.

11. System, umfassend:
einen Datenspeicher; und
einen oder mehrere Computer, die mit dem Datenspeicher interagieren und Anweisungen ausführen, die den einen oder mehrere Computer veranlassen, Operationen gemäß dem Verfahren nach einem der Ansprüche 1 bis 10 durchzuführen.

12. Nicht flüchtiges computerlesbares Medium, das Anweisungen speichert, die bei Ausführung durch einen oder mehrere Computer den einen oder mehrere Computer veranlassen, Operationen gemäß dem Verfahren nach einem der Ansprüche 1 bis 10 durchzuführen.

## Revendications

1. Procédé mis en oeuvre par ordinateur pour évaluer des interactions avec une interface d'utilisateur d'une application (107) d'origine s'exécutant sur un dispositif (106) d'utilisateur, comportant les étapes consistant à :
recevoir (402) en provenance du dispositif (106) d'utilisateur une pluralité de groupes (129) de trames pour une session d'utilisateur avec l'application (107) d'origine, chaque groupe de trames comportant, pour chaque trame parmi une ou plusieurs trames représentant un état respectif de l'interface d'utilisateur de l'application d'origine à un instant respectif, des données spécifiant
i) une disposition d'objets de présentation utilisés par l'application d'origine pour générer l'interface d'utilisateur de l'application d'origine à l'instant respectif, la disposition des objets de présentation spécifiant un emplacement de chaque objet de présentation, chaque objet de présentation étant un objet qui génère une représentation visuelle de lui-même à l'intérieur d'une partie de l'interface d'utilisateur, et
ii) pour un ou plusieurs des objets de présentation, une ou plusieurs opérations de dessin effectuées pour générer la représentation visuelle de l'objet ou des objets de présentation ; et
générer (404), d'après les données spécifiées par la pluralité de groupes de trames, des données (140) de reproduction qui présentent des changements visuels de l'interface d'utilisateur correspondant aux opérations de dessin effectuées pour générer la représentation visuelle de chaque objet de présentation, la génération des données de reproduction comportant le fait de redessiner les trames comprises dans les groupes de trames pour la session d'utilisateur à l'aide des données spécifiant i) la disposition d'objets de présentation dans la trame et ii) les opérations de dessin utilisées pour générer chaque objet de présentation dans la trame de telle façon que les données de reproduction représentent une reproduction en temps réel de la session d'utilisateur, l'action de redessiner comportant, pour chaque trame, les étapes consistant à
i) identifier chaque objet de présentation pour la trame et
ii) restituer chaque objet de présentation à un emplacement respectif dans un canevas sur la base d'opérations de dessin utilisées pour générer chaque objet de présentation telles que spécifiées par les données dans le groupe de trames pour la trame.

2. Procédé selon la revendication 1, chaque objet de présentation comportant soit une vue soit une couche et chaque groupe de trames comprenant des données spécifiant une représentation hiérarchique de chaque vue ou couche.

3. Procédé selon la revendication 1, la génération des données de reproduction comportant le fait de recréer la représentation visuelle de chaque objet de présentation d'après les opérations de dessin utilisées pour générer l'objet de présentation.

4. Procédé selon la revendication 1, un code d'instrumentation de l'application d'origine générant chaque groupe de trames, ce qui inclut le fait d'amener chaque couche de chaque objet de présentation à se dessiner elle-même vers un contexte de dessin hors écran et de stocker des données spécifiant des opérations de dessin effectuées pour dessiner chaque couche de chaque objet de présentation dans le contexte de dessin hors écran.

5. Procédé selon la revendication 4, le contexte de dessin étant un contexte de dessin basé sur le Format de documents portables (PDF) et des données spécifiant chaque opération de dessin étant stockées dans un document PDF.

6. Procédé selon la revendication 4, le code d'instrumentation amenant, pour chaque objet de présentation donné, une bibliothèque de dessin d'un système d'exploitation sur lequel s'exécute l'application d'origine à dessiner, vers le contexte de dessin hors écran, un repère de début pour l'objet de présentation avant que la vue soit dessinée vers le contexte de dessin hors écran et un repère de fin pour l'objet de présentation après que l'objet de présentation a été dessiné vers le contexte de dessin hors écran.

7. Procédé selon la revendication 6, le code d'instrumentation affectant chaque opération de dessin du contexte de dessin hors écran entre le repère de début et le repère de fin à l'objet de présentation donné.

8. Procédé selon la revendication 1 :
chaque groupe de trames comprenant des données spécifiant un ou plusieurs événements d'interface d'utilisateur ayant eu lieu pendant la présentation d'un ou de plusieurs objets de présentation ; et
la génération des données de reproduction comportant le fait de recréer l'événement ou les événements d'interface d'utilisateur pendant la présentation de l'objet ou des objets de présentation.

9. Procédé selon la revendication 1, l'opération ou les opérations de dessin comportant des opérations qui dessinent du texte, des images, de la vidéo ou un autre contenu vers l'interface d'utilisateur.

10. Procédé selon la revendication 1, l'opération ou les opérations de dessin étant effectuées dans un contexte de dessin.

11. Système comportant :
un stockage de données ; et
un ou plusieurs ordinateurs qui interagissent avec le stockage de données et exécutent des instructions qui amènent l'ordinateur ou les ordinateurs à effectuer des opérations selon le procédé de l'une quelconque des revendications 1 à 10.

12. Support non transitoire lisible par ordinateur stockant des instructions qui, lors de leur exécution par un ou plusieurs ordinateurs, amènent l'ordinateur ou les ordinateurs à effectuer des opérations selon le procédé de l'une quelconque des revendications 1 à 10.
